# EUROPÄISCHE PATENTSCHRIFT

(11) **EP 2 793 334 B1**
(45) Veröffentlichungstag und Bekanntmachung des Hinweises auf die Patenterteilung: **06.05.2020**
(21) Anmeldenummer: 14158280.9
(22) Anmeldetag: 07.03.2014
(51) Int. Cl.: H02G 3/06, H02G 15/04, F16L 5/02, H02G 3/22

(54) **Kabelverschraubung mit integralem Gelenk**
Cable connection with integral joint
Dispositif de fixation de câble avec articulation intégrale

(30) Priorität: 17.04.2013 DE 202013003600 U
(43) Veröffentlichungstag der Anmeldung: 22.10.2014
(73) Patentinhaber: Wiska Hoppmann & Mulsow GmbH, 24568 Kaltenkirchen (DE)
(72) Erfinder: Gehre, Peter, 22529 Hamburg (DE)
(74) Vertreter: Eisenführ Speiser

(56) Entgegenhaltungen:
- EP-A1- 1 829 662
- DE-A1- 2 631 996
- DE-A1-102006 062 609
- DE-C1- 4 011 024
- DE-C1- 4 127 162
- DE-U1- 20 010 394
- FR-A1- 2 786 247
- GB-A- 2 013 420

## Beschreibung

Die Erfindung betrifft eine Kabelverschraubung zur Durchführung einer Leitung durch eine Wandöffnung gemäß Anspruch 1.

Kabelverschraubungen dieser Art dienen dazu, um eine elektrische Leitung durch eine Wandöffnung, beispielsweise eine Gehäusewandöffnung durchzuführen. Die elektrische Leitung wird hierbei davor bewahrt, durch Relativbewegungen im Betrieb an den Kanten der Wandöffnungen beschädigt zu werden, zugleich wird eine axiale Festsetzung der Leitung in Ihrer Längsrichtung durch die Klemmung in der Kabelverschraubung erzielt, was zu einer Zugentlastung der Leitung führt.

Kabelverschraubungen dieser Art weisen oftmals zusätzliche Funktionen auf. Häufig wird die Leitung innerhalb der Kabelverschraubung zusätzlich abgedichtet, sodass die Leitung gegen Flüssigkeitsdurchtritt und gegebenenfalls auch Gasdurchtritt abgedichtet durch die Wandöffnung geführt ist. Weiterhin kann als zusätzliche Funktion einer Kabelverschraubung auch eine Erdung einer abgeschirmten Leitung über die Kabelverschraubung erfolgen, indem ein elektrischer Kontakt von dem Abschirmgeflecht der Leitung zu der Wand, in der die Wandöffnung ausgebildet ist, durch die Kabelverschraubung hergestellt wird.

Kabelverschraubungen werden in vielen Anwendungen in großer Anzahl eingesetzt und unterliegen daher als Massenprodukte einem hohen Preisdruck, aus dem das Bestreben einer kostengünstigen Fertigungsweise resultiert. Ungeachtet dessen, dass daher sowohl bei den Materialkosten als auch den Fertigungskosten Einsparungen angezeigt und angestrebt sind, wird an eine Kabelverschraubung der Anspruch gestellt, dass sie das durch die Wandöffnung geführte Kabel zuverlässig klemmt also zugentlastet. Im Sinne einer geringen Vorratshaltung ist es dabei wünschenswert, dass eine Kabelverschraubung diese zuverlässige Zugentlastung für Kabel unterschiedlichen Durchmessers erzielt, also Kabel aus einem möglichst großen Durchmesserbereich zuverlässig klemmt und zugentlastet.

Eine bekannte Vorrichtung zum Halten von Kabeln, Leitungen, Schläuchen oder dergleichen ist aus der DE 40 11 024 C1 bekannt. Ferner offenbaren die DE 26 31 996 A1, DE 200 10 394 U1, DE 10 2006 062 609 A1, FR 2 786 247 A1 und GB 2 013 420 A vorbekannte Kabelverschraubungen.

Aus DE 41 27 162 C1 ist zudem eine Kabelverschraubung mit einer Schraubhülse, einer damit verbindbaren Gegenhülse oder einem Druckstück und mit einem damit gegen das Kabel oder den Schutzschlauch pressbaren Klemmeinsatz bekannt, wobei die Gegenhülse oder das Druckstück den Klemmeinsatz mit einer ringartigen Druckfläche zumindest an einer der Stirnseiten beaufschlagt oder übergreift und beim Anziehen des Gewindes mit einer sich verjüngenden Form, zum Beispiel mittels Rundung oder mittels eines Konus, welche in der Schraubhülse oder anstelle der ringartigen Druckfläche in der Gegenhülse angeordnet ist, einen mit axialen, an der Stirnseite mündenden Schlitzen versehenen, Klemmfinger bildenden Bereich des Klemmeinsatzes radial gegen das Kabel oder dergleichen hin verformt, wobei zwischen Klemmeinsatz und Kabel eine Dichtung angeordnet ist, die von den durch die Schlitze an dem Klemmeinsatz gebildeten Klemmfingern durch deren radiale Verformung gegen das Kabel anpressbar ist, dadurch gekennzeichnet, dass wenigstens ein Teil der Gesamtzahl der Klemmfinger zumindest zwei in axialer Richtung nebeneinander angeordnete Bereiche unterschiedlicher radialer Dicke hat, und dass die radiale Dicke des dickeren Bereiches des Klemmfingers wenigstens etwa zwei Drittel des Maßes beträgt, welches sich zwischen dem Kerndurchmesser des Gewindes der Schraubhülse und dem gleichen Gewinde der Gegenhülse bzw. Überwurfmutter und der stirnseitigen Durchgangsöffnung für das Kabel durch die Schraubhülse und die Gegenhülse, das heißt dem größten Kabeldurchmesser, erstreckt.

Der Erfindung liegt die Aufgabe zugrunde, eine Kabelverschraubung bereitzustellen, welche vor dem Hintergrund des Kostendrucks der Fertigung diese Eigenschaften besser erfüllt als bekannte Kabelverschraubungen.

Erfindungsgemäß wird diese Aufgabe durch Anspruch 1, insbesondere durch eine Kabelverschraubung der eingangs genannten Art gelöst, bei welcher die Klemmelemente und das Stutzenelement aus einem ersten Material ausgebildet sind und die Klemmelemente am Stutzelement befestigt sind, wobei zwischen den Klemmelementen und dem Stutzenelement ein Gelenkabschnitt aus einem zweiten Material ausgebildet ist, das einen niedrigeren Elastizitätsmodul aufweist als das erste Material.

Erfindungsgemäß sind der die Klemmelemente umfassende Klemmabschnitt und das Stutzenelement einstückig ausgeführt, d.h. integral gefertigt und die Verbindung zwischen den Klemmelementen und dem Stutzenelement wird durch einen Gelenkabschnitt erzielt. Dieser Gelenkabschnitt besteht aus einem zweiten Material, welches einen niedrigeren Elastizitätsmodul hat als das erste Material, aus dem das Stutzenelement und die Klemmelemente ausgebildet sind. Hierdurch wird erreicht, dass die Klemmelemente und das Stutzenelement steifer sind als der Gelenkabschnitt und folglich der Gelenkabschnitt eine Relativbewegung zwischen den Klemmelementen und dem Stutzenelement erheblich erleichtert. Zudem kann durch die erhöhte Elastizität des Gelenkabschnitts eine reversible elastische Formung erreicht werden, um die Klemmelemente aus der ersten Stellung in die zweite Stellung und zurück zu bewegen. Hierdurch wird eine mehrfache Montage und Demontage der erfindungsgemäßen Kabelverschraubung ermöglicht, ohne dass hierdurch die funktionalen Eigenschaften der Kabelverschraubung herabgesetzt werden.

Bevorzugt ist es, dass das Elastizitätsmodul des Gelenkabschnitts höchstens 50% des Elastizitätsmoduls des Stutzenelements beträgt, bevorzugt ist es, dass das Elastizitätsmodul des Gelenkabschnitts weniger als 25% und insbesondere weniger als 10% des Elastizitätsmoduls des Stutzenelements beträgt.

Erfindungsgemäß wird durch die höhere Steifigkeit der Klemmelemente und des Stutzenelements in Relation zu dem Gelenkabschnitt eine zuverlässige und definierte Klemmkraft durch die Klemmelemente auf die Leitung bzw. das Kabel, welches zugentlastet werden soll, ausgeübt. Durch die Kombination einer leichten Beweglichkeit der Klemmelemente relativ zu Stutzenelement mit zugleich hoher Steifigkeit der Klemmelemente und des Stutzenelements selbst, kann mit der erfindgungsgemäßen Kabelverschraubung ein großer Durchmesserbereich an Kabeln bzw. Leitungen zuverlässig geklemmt und zugentlastet werden.

Die an dem Spannelement ausgebildete Spannfläche ist vorzugsweise eine als Keil wirkende Fläche, beispielsweise eine konische Innenfläche. Aufgrund der leichten Beweglichkeit der Klemmelemente relativ zum Stutzenelement kann diese Spannfläche mit einem steilen Keil- bzw. Kegelwinkel ausgeführt sein, weil keine hohe Spannkraft erforderlich ist, um die Klemmelemente zu bewegen. Durch diesen steilen Keil- bzw. Kegelwinkel wird es möglich, die Klemmelemente aus einer ersten Stellung in eine dem gegenüber einen erheblich geringeren Innendurchmesser umschreibende zweite Stellung zu bringen, indem das Spannelement aus einer ersten Position über einen in Relation zu dieser Durchmesseränderung geringen Weg in eine zweite Position bewegt wird. Die Montage und Zugentlastung eines Kabels in der erfindungsgemäßen Kabelverschraubung wird hierdurch erheblich vereinfacht. So kann beispielsweise dann, wenn das Spannelement als Hutmutter ausgeführt ist und mit einer Verschraubung auf dem Stutzenelement befestigt ist, durch nur wenige Umdrehungen dieser Hutmutter auf dem Stutzenelement die Klemmelemente vom größten zu spannenden Leitungsquerschnitt auf den kleinsten zu spannenden Leitungsquerschnitt gebracht werden, weil der Innenkonus der Hutmutter sehr steil, beispielsweise 45° oder mehr, ausgeführt werden kann.

Gemäß einer ersten, bevorzugten Ausführungsform ist der Gelenkabschnitt an das Stutzenelement und an die Klemmelemente angespritzt und stoffschlüssig mit diesen verbunden. Bei dieser Ausgestaltung sind der Gelenkabschnitt und das Stutzenelement und die Klemmelemente zeitgleich oder zeitversetzt durch Kunststoffspritzvorgänge mit zwei unterschiedlichen Materialien in einer Kunststoffspritzform hergestellt. Hierbei kann zunächst das erste oder zweite Material gespritzt werden und darauf folgend das zweite bzw. erste Material zeitversetzt nachgespritzt werden oder es können beide Materialien gleichzeitig in die Form gespritzt werden. Die beiden Materialien verbinden sich hierbei aufgrund der hohen Verarbeitungstemperatur im schmelzflüssigen Zustand stoffschlüssig miteinander und bilden eine belastbare Verbindung im Grenzbereich zwischen den beiden Materialien aus. Der Gelenkabschnitt wird hierdurch fest mit dem Stutzenelement verbunden und die Klemmelemente fest mit dem Gelenkabschnitt.

Grundsätzlich kann der Gelenkabschnitt mehrere geometrisch begrenzten Gelenkabschnittsteile aufweisen, die für jeweils ein Klemmelement, zwei oder eine begrenzte Anzahl von Klemmelementen die Verbindung zum Stutzenelement herstellen. Ebenso kann der Gelenkabschnitt als ein zusammenhängendes Bauelement aus dem zweiten Material hergestellt sein und alle Klemmelemente mit dem Stutzenelement verbinden.

Grundsätzlich ist es bevorzugt, dass das erste und das zweite Material ein Kunststoffmaterial sind. So kann das erste Material beispielsweise ein Hartkunststoff wie Polyethylen, Polypropylen, Polyamid, PVC oder ein sonstiger thermoplastischer Kunststoff sein und insbesondere zur Erhöhung des Elastizitätsmoduls bzw. der Steifigkeit und Festigkeit Verstärkungselemente wie Glasfasern, Metall- oder Mineralfasern oder andere Füllstoffe beinhalten. Der Gelenkabschnitt ist demgegenüber vorzugsweise aus einem Kunststoff mit hoher Elastizität ausgebildet, beispielsweise einem Elastomer, hier können beispielsweise silikonbasierte oder polyurethanbasierte, insbesondere gummielastische Kunststoffe zum Einsatz kommen.

Erfindungsgemäß weist die Kabelverschraubung ein schlauchförmiges Dichtungselement auf, welches innerhalb des Kabelkanals angeordnet ist und mit dem Gelenkabschnitt verbunden ist. Durch diese Fortbildung wird die Abdichtung des Kabels innerhalb der Kabelverschraubung ermöglicht. Dabei ist zu verstehen, dass die Leitung, welche durch die Kabelverschraubung zugentlastet und abgedichtet durch die Wandöffnung hindurchgeführt werden soll, innerhalb des schlauchförmigen Dichtungselementes verläuft und das Dichtungselement durch das Festklemmen der Leitung innerhalb des Klemmabschnitts an die Außenfläche der Leitung angepresst und hiergegen abgedichtet wird. Das Dichtungselement kann dabei aus einem dritten Material bestehen, das verschieden vom ersten und zweiten Material ist. Dieses dritte Material kann angespritzt an das erste oder das zweite Material sein.

Erfindungsgemäß ist hierbei das Dichtungselement stoffschlüssig mit dem Gelenkabschnitt verbunden. Bei dieser Ausgestaltung ist das Dichtungselement mit dem Gelenkabschnitt verbunden und bildet dadurch ein integrales Bauteil gemeinsam mit Gelenkabschnitt, Stutzenelement und dem Klemmabschnitt. Dies erleichtert einerseits die Montage, weiterhin verringert es die Fertigungskosten, da eine geringere Anzahl an Bauteilen bereitgehalten, miteinander kombiniert und zusammengestellt werden muss.

Noch weiter ist es bevorzugt, dass das Dichtungselement aus dem zweiten Material ausgebildet ist. In vielen Anwendungen ist es vorteilhaft, wenn das Dichtungselement ähnliche bzw. gleiche Materialeigenschaften aufweist wie der Gelenkabschnitt, d. h. eine höhere Elastizität als die Klemmelemente und das Stutzenelement aufweist, um hierdurch ein sicheres Abdichten gegen den Außenmantel der Leitung zu erzielen. Diese Anforderungen können in einer zudem auch fertigungstechnisch vorteilhaften Weise erreicht werden, indem das Dichtungselement ebenso wie der Gelenkabschnitt aus dem zweiten Material hergestellt werden. Dies eröffnet insbesondere eine stoffschlüssige Verbindung bzw. integrale Ausbildung zwischen dem Dichtungselement und dem Gelenkabschnitt und gegebenenfalls darüber hinaus stoffschlüssige Verbindungen zwischen dem Dichtungselement und dem Stutzenelement und/oder einigen oder allen Klemmelementen.

Noch weiter ist es bevorzugt, dass das Dichtungselement integral mit dem Gelenkabschnitt ausgebildet und an das Stutzenelement angespritzt ist und dass das Dichtungselement stoffschlüssig mit dem Stutzelement und der Gelenkabschnitt stoffschlüssig mit den Klemmelementen verbunden ist. Durch diese Ausführungsform wird eine einstückige Ausgestaltung von Stutzenelement, Klemmelementen, Gelenkabschnitt und Dichtungselement bereitgestellt, die gleichzeitig niedrige Fertigungskosten und vorteilhafte Materialeigenschaften der vier verbundenen Bauelemente realisiert.

Noch weiter ist es bevorzugt, dass das Dichtungselement sich in den Bereich des Klemmabschnitts erstreckt und radial innenliegend zu den Klemmelementen angeordnet ist. Durch diese Ausgestaltung kann das Dichtungselement durch die Klemmung des Kabels mittels der Klemmelemente an die Außenfläche des Kabels angedrückt werden und hierdurch eine zuverlässige Dichtung bewirken. Dabei kann vorgesehen sein, dass das Dichtungselement an einem, mehreren oder allen Klemmelementen befestigt ist, beispielweise mittels einer stoffschlüssigen Verbindung durch Anspritzen, um hierdurch die Lage und Position des Dichtungselements innerhalb des Kabelkanals zu fixieren und Montagefehler zu vermeiden. Alternativ kann das Dichtungselement von den Klemmelementen getrennt sein, d.h. nicht direkt mit diesen verbunden sein, wodurch eine Relativbewegung zwischen dem Dichtungselement und dem Klemmelementen ermöglicht wird. Durch eine solche Relativbewegung kann in einigen Anwendungen der Durchmesserbereich, in dem Kabel durch die Kabelverschraubung zugentlastet werden können, vergrößert werden.

Noch weiter ist es bevorzugt, dass ein Klemmelement als ein Steg ausgebildet ist, der sich ausgehend von dem Gelenkabschnitt in der ersten Stellung axial erstreckt und mittels des Gelenkabschnitts nach radial einwärts in eine der zweiten Stellung entsprechende axial-radiale Erstreckung verschwenkbar ist. Die Klemmelemente sind bei dieser Ausgestaltung als funktionelle, gelenkig am Stutzenelement gelagerte Hebel bzw. Balken ausgeführt, die durch das Spannelement mit ihrem einen Ende nach radial einwärts bewegt werden und hierbei an ihrem anderen Ende mit dem Gelenkabschnitt verbunden sind und um eine Schwenkachse im Bereich dieses Gelenkabschnitts verschwenken. Dabei ist zu verstehen, dass die Klemmelemente sich exakt axial in der ersten Stellung erstrecken können oder bereits in der ersten Stellung eine nach radial einwärts verschwenkte Ausrichtung aufweisen können und gegenüber dieser ersten Stellung durch den Spannvorgang mittels des Spannelements in eine weitere nach radial einwärts verschwenkte Position gebracht werden.

Noch weiter ist es bevorzugt, die erfindungsgemäße Kabelverschraubung durch formschlüssige Verriegelungsmittel zur formschlüssigen Verriegelung des Spannelements an dem Stutzenelement in der zweiten Position fortzubilden. Durch solche formschlüssigen Verriegelungsmittel wird eine versehentliche Lösung der Spannwirkung und Zugentlastung des Kabels vermieden. Die formschlüssigen Verriegelungsmittel können beispielweise durch ein Gewinde ausgeführt sein. Dieses Gewinde kann vorzugsweise selbsthemmend sein, also eine Gewindesteigung aufweisen, die eine ungewollte Lösung des Spannelements vom Stutzenelement verhindert.

Noch weiter ist es bevorzugt, dass das Spannelement als Hutmutter mit einer axialen Öffnung an einem Ende ausgebildet ist, die mittels eines an dem anderen Ende ausgebildeten Innengewindes an einem an dem Stutzenelement ausgebildeten Außengewinde befestigbar ist und durch Aufschrauben auf das Stutzenelement aus der ersten Position in die zweite Position bewegbar ist. Bei dieser Ausgestaltung wird die Hutmutter auf ein Außengewinde am Stutzenelement aufgeschraubt und bewirkt hierdurch die radial einwärts gerichtete Bewegung der Klemmelemente, was beispielsweise durch eine konische oder verrundete Spannfläche innerhalb der Hutmutter bewirkt werden kann, wenn sich die Hutmutter im Zuge des Aufschraubvorgangs axial zu den Klemmelementen bewegt. Dabei ist zu verstehen, dass die Hutmutter die axiale Öffnung an dem Hutende aufweist, um hier durch eine Durchführung des Kabels, welches in der Kabelverschraubung verspannt und gegebenenfalls abgedichtet wird, zu ermöglichen.

Noch weiter ist es bevorzugt, dass das Stutzenelement einen Befestigungsabschnitt aufweist, der einen sich axial erstreckenden Befestigungsbereich und einen Befestigungsflansch mit einem Außendurchmesser, der größer als ein Außendurchmesser des Befestigungsbereichs ist, umfasst. Ein solcher Befestigungsabschnitt ermöglicht die sichere Verankerung der Kabelverschraubung in der Wandöffnung. Dies kann durch unterschiedliche Befestigungsmittel erreicht werden, beispielsweise durch elastische Schnapphaken, eine Verschraubung, die gegen einen Flansch wirkt und dergleichen. Insbesondere ist es dabei vorgesehen, dass der Befestigungsbereich ein Außengewinde aufweist und der Befestigungsflansch einen Außenumfang zum Ansetzen eines Werkzeugs zur Sicherung des Stutzenelements gegen Rotation um die Längsachse aufweist, insbesondere eine Mehrkantaußenfläche. Durch diese Ausgestaltung wird es möglich, die Kabelverschraubung bei dem Montagevorgang verdrehsicher zu halten und hierdurch eine Beschädigung des Kabels während des Spannvorgangs durch Verdrehung oder Verdrillung des Kabels zuverlässig zu verhindern. Der Außenumfang am Befestigungsflansch kann beispielsweise als zylindrischer Flansch mit zwei Schlüsselflächen, als Außenvierkant oder Außensechskant ausgebildet sein. Insbesondere sind auch andere, atypische Außenflächengestaltungen realisierbar, die eine Drehmomentübertragung erlauben und gegen Vandalismus und unerlaubte Demontage des Kabels eine Sicherung darstellen.

Die erfindungsgemäße Kabelverschraubung kann beispielsweise durch ein Verfahren gemäß Anspruch 11 hergestellt werden. Das erfindungsgemäße Verfahren weist insbesondere folgende Schritte auf:
- Spritzen eines Stutzenelementes mit einem innenliegenden Kabelkanal aus einem ersten Material und
- Spritzen einer Mehrzahl von Klemmelementen aus dem ersten Material,
gekennzeichnet durch den Schritt:
- Anspritzen eines Gelenkabschnitts aus einem zweiten Material mit einem niedrigeren Elastizitätsmodul als das erste Material, an das Stutzenelement und die Klemmelemente, wobei der Gelenkabschnitt stoffschlüssig mit den Klemmelementen und dem Stutzenelement verbunden wird.

Das Verfahren kann dabei fortgebildet werden durch den Schritt:
- Gleichzeitiges Anspritzen eines schlauchförmigen Dichtungsabschnitts integral mit dem Anspritzen des Gelenkabschnitts.

Schließlich kann das Verfahren weiter fortgebildet werden, indem der schlauchförmige Dichtungsabschnitt beim Anspritzen:
- Stoffschlüssig mit den Klemmelementen verbunden wird, oder
- Eine Kontaktfläche zu den Klemmelementen ausbildet, die eine Relativbewegung zwischen den Klemmelementen und dem Dichtungsabschnitt ermöglicht.

Eine bevorzugte Ausführungsform der Erfindung wird anhand der beiliegenden Figuren erläutert. Es zeigen
- Figur 1:: Eine perspektivische, demontierte Ansicht einer erfindungsgemäßen Kabelverschraubung von schräg unten,
- Figur 2:: Eine perspektivische, demontierte Ansicht einer erfindungsgemäßen Kabelverschraubung von schräg oben,
- Figur 3:: Eine längsgeschnittene Ansicht der Kabelverschraubung gemäß Figur 1 in einer vormontierten Position,
- Figur 3a:: Einen vergrößerten Ausschnitt aus Figur 3,
- Figur 4:: Eine Ansicht gemäß Figur 2 in einer montierten Position, und
- Figur 4a:: Eine vergrößerte Ansicht aus Figur 4.

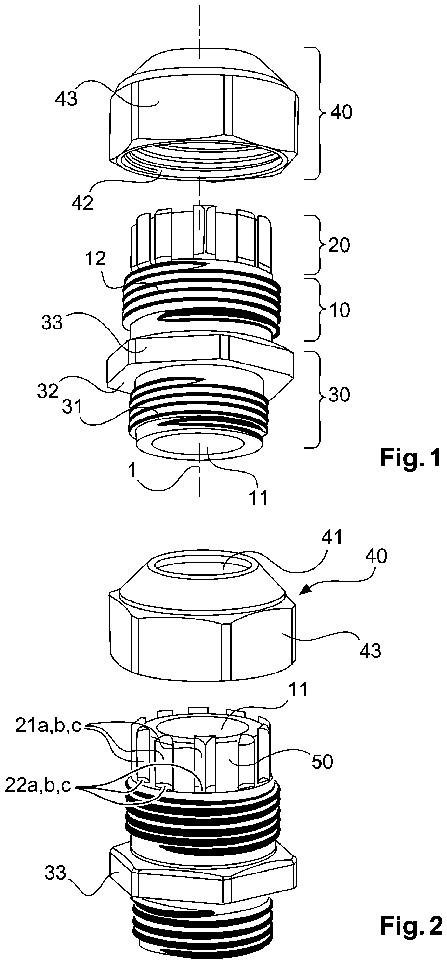

Bezugnehmend zunächst auf die Figuren 1 und 2 ist eine Kabelverschraubung abgebildet, die ein Stutzenelement 10 mit daran angeformtem Klemmabschnitt 20 und angeformten Befestigungsabschnitt 30 sowie eine davon getrennte Hutmutter 40 umfasst.

Das Stutzenelement 10, der Klemmabschnitt 20 und der Befestigungsabschnitt 30 sind einstückig ausgebildet und rotationssymmetrisch entlang einer Mittellängsachse 1 ausgebildet. Die Hutmutter 40 ist ebenfalls rotationssymmetrisch ausgebildet um diese Mittellängsachse 1. Sie weist an ihrem von dem Stutzenelement wegweisenden Ende eine axiale Öffnung 41 auf. Diese axiale Öffnung 41 ist in Fluchtung zu einem Kabelkanal 11, der im Stutzenelement, Klemmabschnitt und Befestigungsabschnitt ausgebildet ist.

Die Hutmutter 40 weist in Ihrem zum Stutzenelement weisenden Endbereich ein Innengewinde 42 auf, mittels dem sie auf ein Außengewinde 12 im Bereich des Stutzenelementes 10 aufgeschraubt werden kann. Zu diesem Zweck ist an der Hutmutter 40 ein Außensechskant 43 ausgebildet, um ein Drehmoment mittels eines Werkzeugs aufbringen zu können.

Der Befestigungsabschnitt umfasst ebenfalls einen Außensechskant 33, der an einem Flansch 32 ausgebildet ist. Dieser Flansch 32 ist zwischen dem Stutzenelement 10 und einem Außengewinde 31 ausgebildet. Der Außensechskant 33 ermöglicht ein Gegenhalten beim Festziehen der Hutmutter sowie beim Festziehen einer Schraube auf dem Außengewinde 31, wenn die Kabelverschraubung in einer Gehäusewandöffnung befestigt wird. Diese Befestigung erfolgt durch Einführen des an der Seite des Außengewindes 31 liegenden Endes der Kabeldurchführung bis zum Anschlag am Flansch 32 und Festziehen einer Befestigungsmutter auf dem Außengewinde 31.

Der Klemmabschnitt 20 umfasst mehrere Klemmelemente 21a, b, c, ... Jedes Klemmelement ist als im Querschnitt etwa dreieckiger Steg ausgebildet, wobei die Klemmelemente in Umfangsrichtung wechselweise mit einer nach innen liegenden Spitze und einer nach innen liegenden Basis angeordnet sind. Auf diese Weise können sich die einander zuweisenden Schenkelflächen kongruent aneinander legen und es wird bei radialem Einwärtsdrücken der Klemmelemente 21a, b, c... ein Zusammenführen der Klemmelementenden auf einen besonders kleinen Radius ermöglicht.

Jedes der Klemmelemente 21a, b, c ... ist mittels eines Gelenkabschnittbereichs 22a, b, c gelenkig mit dem Stutzenelement verbunden. Die Gelenkabschnittsbereiche 22a, b, c bilden einen Gelenkabschnitt und sind aus einem Polyurethan-Elastomer-Material mit gummielastischen Eigenschaften ausgebildet. Die Klemmelemente 21a, b, c und das Stutzenelement sowie der Befestigungsabschnitt und die Hutmutter sind aus einem Hartplastik wie beispielsweise Polyamid ausgebildet.

Im Bereich der Klemmelemente 21a, b, c ist radial innenliegend ein Dichtungsschlauch 50 angeordnet, der sich bis knapp unterhalb der Erstreckungslänge der Klemmelemente 21a, b, c in axialer Richtung erstreckt. Der Dichtungsschlauch 50 ist aus demselben Polyurethan-Elastomer ausgebildet wie die Gelenkabschnittsbereiche 22a, b, c und ist integral mit diesen ausgebildet.

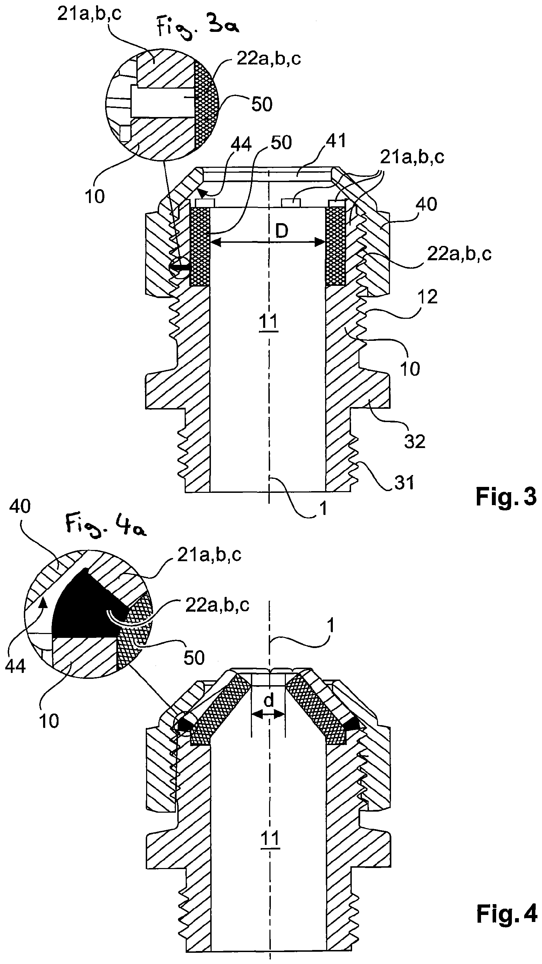

Die Figuren 3, 4 zeigen die Funktionsweise und den Aufbau der erfindungsgemäßen Kabelverschraubung im Längsschnitt. Wie ersichtlich ist, weist die Hutmutter 40 eine innere, konische Spannfläche 44 auf, die in der in Figur 3 gezeigten Vormontageposition die Enden der Klemmelemente 21a, b, c berühren. Die Klemmelemente 21a, b, c sind in dieser Position der Hutmutter 40 in einer Stellung, die eine axiale Erstreckung darstellt.

Wird die Hutmutter 40 mittels des Innengewindes 42 und des Außengewindes 12 weiter auf das Stutzenelement 10 aufgeschraubt, so werden hierdurch die in Kontakt mit der Spannfläche 44 stehenden Enden der Klemmelemente nach radial einwärts gedrückt. Die Klemmelemente verschwenken hierdurch um die Gelenkabschnittsbereiche 22a, b, c nach radial einwärts. Hierdurch wird der Dichtungsschlauch 50 ebenfalls verformt und nach radial einwärts gedrückt.

Die Figuren 3a und 4a zeigen die Gelenkabschnittsbereiche 22a, b, c in der ungespannten Stellung der Klemmelemente (Figur 3a) und in der gespannten Stellung der Klemmelemente (Figur 4a).

Der Dichtungsschlauch 50 ist in einem unteren Bereich 51 an das Stutzenelement 10 angespritzt und stoffschlüssig mit diesem verbunden. Ebenso ist der Dichtungsschlauch 50 stoffschlüssig und integral mit den Gelenkabschnittsbereichen 22a, b, c verbunden. In einem oberen Bereich ist der Dichtungsschlauch hingegen nicht mit den Klemmelementen 21a, b, c verbunden, sodass eine Relativbewegung in der Grenzfläche zwischen dem Dichtungsschlauch 50 und den Klemmelementen 21a, b, c möglich ist.

Figur 4 zeigt die erfindungsgemäße Kabelverschraubung in einer gespannten Montagesituation. Wie ersichtlich ist, ist ein Durchmesser D in der vormontierten Position gemäß Figur 3 nun im Bereich der Dichtung und der Klemmelemente auf einen maßgeblich verringerten Durchmesser d reduziert und ein in dem Kabelkanal 11 angeordnetes Kabel wäre hierdurch radial eingespannt und gegen axiale Bewegung gesichert, also zugentlastet. Zugleich wird durch das Anliegen des Dichtungsschlauchs 50 eine Dichtung zum Kabel hergestellt.

## Patentansprüche

1. Kabelverschraubung zur Durchführung einer Leitung durch eine Wandöffnung, umfassend:
- Ein sich entlang einer Längsachse erstreckendes Stutzenelement (10) mit einem innenliegenden, sich entlang der Längsachse erstreckenden Kabelkanal (11),
- Einen Klemmabschnitt (20) mit einer Mehrzahl von Klemmelementen (21a, b, c), die aus einer ersten Stellung, in der die Klemmelemente (21a, b, c) einen ersten Innendurchmesser begrenzen, in eine zweite Stellung beweglich sind, in der die Klemmelemente (21a, b, c) einen zweiten Innendurchmesser begrenzen,
- Wobei der zweite Durchmesser kleiner als der erste Durchmesser ist,
- Ein Spannelement, welches mit dem Stutzenelement (10) mechanisch gekoppelt ist und eine Spannfläche aufweist, die mit den Klemmelementen (21a, b, c) zusammenwirkt, wobei das Spannelement aus einer ersten Position am Stutzenelement (10), in der die Klemmelemente (21a, b, c) in der ersten Stellung sind, in eine zweite Position am Stutzenelement (10) bewegbar ist und in dieser zweiten Position am Stutzenelement (10) befestigbar ist, in der die Spannfläche die Klemmelemente (21a, b, c) in die zweite Stellung drückt,
wobei die Klemmelemente (21a, b, c) und das Stutzenelement (10) aus einem ersten Material ausgebildet sind und die Klemmelemente (21a, b, c) am Stutzelement (10) befestigt sind, **dadurch gekennzeichnet, dass** zwischen den Klemmelementen (21a, b, c) und dem Stutzenelement (10) ein Gelenkabschnitt (22a, b, c) aus einem zweiten Material ausgebildet ist, das einen niedrigeren Elastizitätsmodul aufweist als das erste Material, wobei ein schlauchförmiges Dichtungselement (50), welches innerhalb des Kabelkanals (11) angeordnet ist und mit dem Gelenkabschnitt (22a, b, c) verbunden ist,
wobei das Dichtungselement (50) stoffschlüssig mit dem Gelenkabschnitt (22a, b, c) verbunden ist.

2. Kabelverschraubung nach Anspruch 1,
**dadurch gekennzeichnet, dass** der Gelenkabschnitt (22a, b, c) an das Stutzenelement (10) und an die Klemmelemente (21a, b, c) angespritzt und stoffschlüssig mit diesen verbunden ist.

3. Kabelverschraubung nach einem der vorhergehenden Ansprüche,
**dadurch gekennzeichnet, dass** das Dichtungselement (50) aus dem zweiten Material ausgebildet ist.

4. Kabelverschraubung nach einem der vorhergehenden Ansprüche,
**dadurch gekennzeichnet, dass** das Dichtungselement (50) integral mit dem Gelenkabschnitt (22a, b, c) ausgebildet und an das Stutzenelement (10) angespritzt ist und dass das Dichtungselement (50) stoffschlüssig mit dem Stutzelement und der Gelenkabschnitt (22a, b, c) stoffschlüssig mit den Klemmelementen (21a, b, c) verbunden ist.

5. Kabelverschraubung nach einem der vorhergehenden Ansprüche,
**dadurch gekennzeichnet, dass** das Dichtungselement (50) sich in den Bereich des Klemmabschnitts (20) erstreckt und radial innenliegend zu den Klemmelementen (21a, b, c) angeordnet ist.

6. Kabelverschraubung nach einem der vorhergehenden Ansprüche,
**dadurch gekennzeichnet, dass** ein Klemmelement als ein Steg ausgebildet ist, der sich ausgehend von dem Gelenkabschnitt (22a, b, c) in der ersten Stellung axial erstrecken und mittels des Gelenkabschnitts (22a, b, c) in eine der zweiten Stellung entsprechende axial-radiale Erstreckung verschwenkbar sind.

7. Kabelverschraubung nach einem der vorhergehenden Ansprüche,
**gekennzeichnet durch** formschlüssige Verriegelungsmittel zur formschlüssigen Verriegelung des Spannelements an dem Stutzenelement (10) in der zweiten Position.

8. Kabelverschraubung nach einem der vorhergehenden Ansprüche,
**dadurch gekennzeichnet, dass** das Spannelement als Hutmutter (40) mit einer axialen Öffnung (41) an einem Ende ausgebildet ist, die mittels eines an dem anderen Ende ausgebildeten Innengewindes (42) an einem an dem Stutzenelement (10) ausgebildeten Außengewinde (12) befestigbar ist und durch Aufschrauben auf das Stutzenelement (10) aus der ersten Position in die zweite Position bewegbar ist.

9. Kabelverschraubung nach einem der vorhergehenden Ansprüche,
**dadurch gekennzeichnet, dass** das Stutzenelement (10) einen Befestigungsabschnitt (30) aufweist, der einen sich axial erstreckenden Befestigungsbereich und einen Befestigungsflansch (32) mit einem Außendurchmesser, der größer als ein Außendurchmesser des Befestigungsbereichs ist, umfasst.

10. Kabelverschraubung nach Anspruch 9,
**dadurch gekennzeichnet, dass** der Befestigungsbereich ein Außengewinde (31) aufweist und der Befestigungsflansch (32) einen Außenumfang zum Ansetzen eines Werkzeugs zur Sicherung des Stutzenelements (10) gegen Rotation um die Längsachse aufweist, insbesondere eine Mehrkantaußenfläche (33).

11. Verfahren zum Herstellen einer Kabelverschraubung, mit den Schritten:
- Spritzen eines Stutzenelementes (10) mit einem innenliegenden Kabelkanal (11) aus einem ersten Material und
- Spritzen einer Mehrzahl von Klemmelementen (21a, b, c) aus dem ersten Material,
**gekennzeichnet durch** die Schritte:
- Anspritzen eines Gelenkabschnitts (22a, b, c) aus einem zweiten Material mit einem niedrigeren Elastizitätsmodul als das erste Material, an das Stutzenelement (10) und die Klemmelemente (21a, b, c), wobei der Gelenkabschnitt (22a, b, c) stoffschlüssig mit den Klemmelementen (21a, b, c) und dem Stutzenelement (10) verbunden wird,
und stoffschlüssiges Verbinden eines schlauchförmigen Dichtungselements (50) mit dem Gelenkabschnitt (22a, b, c), wobei das schlauchförmige Dichtungselement (50) innerhalb des Kabelkanals (11) angeordnet ist und mit dem Gelenkabschnitt (22a, b, c) verbunden ist.

12. Verfahren nach Anspruch 11,
**gekennzeichnet durch** den Schritt:
- Gleichzeitiges Anspritzen des schlauchförmigen Dichtungsabschnitts (50) integral mit dem Anspritzen des Gelenkabschnitts (22a, b, c).

13. Verfahren nach Anspruch 12, **dadurch gekennzeichnet, dass** der schlauchförmige Dichtungsabschnitt (50) beim Anspritzen
- Stoffschlüssig mit den Klemmelementen (21a, b, c) verbunden wird, oder
- Eine Kontaktfläche zu den Klemmelementen (21a, b, c) ausbildet, die eine Relativbewegung zwischen den Klemmelementen (21a, b, c) und dem Dichtungsabschnitt (50) ermöglicht.

## Claims

1. Cable gland for running a cable through a wall opening, comprising:
- a supporting element (10) extending along a longitudinal axis having an internal cable duct (11) extending along the longitudinal axis,
- a clamping section (20) having a plurality of clamping elements (21a, b, c) which are movable from a first position in which the clamping elements (21a, b, c) bound a first internal diameter into a second position in which the clamping elements (21a, b, c) bound a second internal diameter,
- the second diameter being smaller than the first diameter,
- a clamp element which is mechanically coupled with the supporting element (10) and has a clamp surface which co-operates with the clamping elements (21a, b, c), and the clamp element can be moved from a first position on the supporting element (10) in which the clamping elements (21a, b, c) are in the first position into a second position on the supporting element (10) and can be secured on the supporting element (10) in this second position in which the clamp surface presses the clamping elements (21a, b, c) into the second position,
the clamping elements (21a, b, c) and the supporting element (10) are made from a first material and the clamping elements (21a, b, c) are secured on the supporting element (10), **characterised in that** a hinged section (22a, b, c) made from a second material having a lower modulus of elasticity than the first material is provided between the clamping elements (21a, b, c) and the supporting element (10) and a sleeve-shaped sealing element (50) is disposed inside the cable duct (11) and is connected to the hinged section (22a, b, c),
the sealing element (50) being connected to the hinged section (22a, b, c) by cohesive bonding.

2. Cable gland as claimed in claim 1,
**characterised in that** the hinged section (22a, b, c) is injection moulded onto the supporting element (10) and onto the clamping elements (21a, b, c) and is joined thereto by cohesive bonding.

3. Cable gland as claimed in one of the preceding claims, **characterised in that** the sealing element (50) is made from the second material.

4. Cable gland as claimed in one of the preceding claims, **characterised in that** the sealing element (50) is formed integrally with the hinged section (22a, b, c) and is injection moulded onto the supporting element (10), and the sealing element (50) is connected to the supporting element by cohesive bonding and the hinged section (22a, b, c) is connected to the clamping elements (21a, b, c) by cohesive bonding.

5. Cable gland as claimed in one of the preceding claims, **characterised in that** the sealing element (50) extends into the region of the clamping section (20) and is disposed radially inside of the clamping elements (21a, b, c).

6. Cable gland as claimed in one of the preceding claims, **characterised in that** a clamping element is provided in the form of a web which extends axially out from the hinged section (22a, b, c) in the first position and can be pivoted by means of the hinged section (22a, b, c) into an axial-radial extension corresponding to the second position.

7. Cable gland as claimed in one of the preceding claims, **characterised by** positively fitting locking means to lock the clamp element on the supporting element (10) in a positive fit in the second position.

8. Cable gland as claimed in one of the preceding claims, **characterised in that** the clamp element is provided in the form of a cap nut (40) having an axial orifice (41) at one end which can be secured by means of an internal thread (42) formed on the other end to an external thread (12) formed on the supporting element (10) and can be moved from the first position into the second position when screwed onto the supporting element (10).

9. Cable gland as claimed in one of the preceding claims, **characterised in that** the supporting element (10) has a fixing section (30) comprising an axially extending fixing region and a fixing flange (32) having an external diameter that is bigger than the external diameter of the fixing region.

10. Cable gland as claimed in claim 9,
**characterised in that** the fixing region has an external thread (31) and the fixing flange (32) has an external circumference for applying a tool to prevent the supporting element (10) from rotating about the longitudinal axis, in particular a polygonal external surface (33).

11. Method for producing a cable gland, comprising the steps:
- injection moulding a supporting element (10) with an internal cable duct (11) from a first material and
- injection moulding a plurality of clamping elements (21a, b, c) from the first material,
**characterised by** the steps:
- injecting a hinged section (22a, b, c) from a second material having a lower modulus of elasticity than the first material onto the supporting element (10) and clamping elements (21a, b, c), the hinged section (22a, b, c) being connected to the clamping elements (21a, b, c) and supporting element (10) by cohesive bonding,
and connecting a sleeve-shaped sealing element (50) to the hinged section (22a, b, c) by cohesive bonding, the sleeve-shaped sealing element (50) being disposed inside the cable duct (11) and connected to the hinged section (22a, b, c).

12. Method as claimed in claim 11,
**characterised by** the step:
- simultaneously injecting the sleeve-shaped sealing element (50) integrally with and whilst injecting the hinged section (22a, b, c).

13. Method as claimed in claim 12, **characterised in that** during the injection process, the sleeve-shaped sealing section (50)
- is connected to the clamping elements (21a, b, c) by cohesive bonding, or
- a contact surface with the clamping elements (21a, b, c) is formed which enables a relative movement between the clamping elements (21a, b, c) and the sealing element (50).

## Revendications

1. Dispositif de fixation de câble pour le passage d'une conduite à travers une ouverture de paroi, comprenant :
- un élément de tubulure (10) s'étendant le long d'un axe longitudinal avec un canal de câble (11) intérieur s'étendant le long de l'axe longitudinal,
- une section de pincement (20) avec une pluralité d'éléments de pincement (21a, b, c), qui sont mobiles d'une première position, dans laquelle les éléments de pincement (21a, b, c) délimitent un premier diamètre intérieur, à une deuxième position, dans laquelle les éléments de pincement (21a, b, c) délimitent un deuxième diamètre intérieur,
- dans lequel le deuxième diamètre est inférieur au premier diamètre,
- un élément de serrage, lequel est couplé mécaniquement à l'élément de tubulure (10) et présente une surface de serrage, qui coopère avec les éléments de pincement (21a, b, c), dans lequel l'élément de serrage est déplaçable d'une première position au niveau de l'élément de tubulure (10), dans laquelle les éléments de pincement (21a, b, c) sont dans la première position, à une deuxième position au niveau de l'élément de tubulure (10) et peut être fixé dans cette deuxième position au niveau de l'élément de tubulure (10), dans laquelle la surface de serrage presse les éléments de pincement (21a, b, c) dans la deuxième position,
les éléments de pincement (21a, b, c) et l'élément de tubulure (10) sont réalisés en un premier matériau et les éléments de pincement (21a, b, c) sont fixés au niveau de l'élément de tubulure (10), **caractérisé en ce qu'**une section d'articulation (22a, b, c) est réalisée en un deuxième matériau entre les éléments de pincement (21a, b, c) et l'élément de tubulure (10), qui présente un module d'élasticité inférieur à celui du premier matériau,
et qu'un élément d'étanchéité tubulaire (50) est agencé à l'intérieur du canal de câble (11) et est relié à la section d'articulation (22a, b, c),
dans lequel l'élément d'étanchéité (50) est relié par liaison de matière à la section d'articulation (22a, b, c).

2. Dispositif de fixation de câble selon la revendication 1,
**caractérisé en ce que** la section d'articulation (22a, b, c) est moulée par injection sur l'élément de tubulure (10) et sur les éléments de pincement (21a, b, c) et est reliée par liaison de matière à ceux-ci.

3. Dispositif de fixation de câble selon l'une quelconque des revendications précédentes,
**caractérisé en ce que** l'élément d'étanchéité (50) est réalisé avec le deuxième matériau.

4. Dispositif de fixation de câble selon l'une quelconque des revendications précédentes,
**caractérisé en ce que** l'élément d'étanchéité (50) est réalisé d'un seul tenant avec la section d'articulation (22a, b, c) et est moulé par injection sur l'élément de tubulure (10) et que l'élément d'étanchéité (50) est relié par liaison de matière à l'élément de tubulure et la section d'articulation (22a, b, c) est reliée par liaison de matière aux éléments de pincement (21a, b, c).

5. Dispositif de fixation de câble selon l'une quelconque des revendications précédentes,
**caractérisé en ce que** l'élément d'étanchéité (50) s'étend dans la zone de la section de pincement (20) et est agencé radialement à l'intérieur des éléments de pincement (21a, b, c).

6. Dispositif de fixation de câble selon l'une quelconque des revendications précédentes,
**caractérisé en ce qu'**un élément de pincement est réalisé en tant que nervure, qui s'étend axialement depuis la section d'articulation (22a, b, c) dans la première position et est pivotant au moyen de la section d'articulation (22a, b, c) dans une extension axiale-radiale correspondant à la deuxième position.

7. Dispositif de fixation de câble selon l'une quelconque des revendications précédentes,
**caractérisé par** des moyens de verrouillage par complémentarité de forme pour le verrouillage par complémentarité de forme de l'élément de serrage au niveau de l'élément de tubulure (10) dans la deuxième position.

8. Dispositif de fixation de câble selon l'une quelconque des revendications précédentes,
**caractérisé en ce que** l'élément de serrage est réalisé en tant qu'écrou borgne (40) avec une ouverture axiale (41) à une extrémité, qui peut être fixé au moyen d'un filetage intérieur (42) réalisé à l'autre extrémité au niveau d'un filetage extérieur (12) réalisé au niveau de l'élément de tubulure (10) et est déplaçable par vissage sur l'élément de tubulure (10) de la première position à la deuxième position.

9. Dispositif de fixation de câble selon l'une quelconque des revendications précédentes,
**caractérisé en ce que** l'élément de tubulure (10) présente une section de fixation (30), qui comprend une zone de fixation s'étendant axialement et une bride de fixation (32) avec un diamètre extérieur, qui est supérieur à un diamètre extérieur de la zone de fixation.

10. Dispositif de fixation de câble selon la revendication 9,
**caractérisé en ce que** la zone de fixation présente un filetage extérieur (31) et la bride de fixation (32) présente une circonférence extérieure pour l'application d'un outil pour la protection de l'élément de tubulure (10) contre la rotation autour de l'axe longitudinal, en particulier une surface extérieure polygonale (33).

11. Procédé de fabrication d'un dispositif de fixation de câble, avec les étapes de :
- injection d'un élément de tubulure (10) avec un canal de câble intérieur (11) en un premier matériau et
- injection d'une pluralité d'éléments de pincement (21a, b, c) avec le premier matériau, **caractérisé par** les étapes de :
- moulage par injection d'une section d'articulation (22a, b, c) en un deuxième matériau avec un module d'élasticité inférieur à celui du premier matériau, au niveau de l'élément de tubulure (10) et des éléments de pincement (21a, b, c), dans lequel la section d'articulation (22a, b, c) est reliée par liaison de matière aux éléments de pincement (21a, b, c) et à l'élément de tubulure (10),
et liaison par liaison de matière d'un élément d'étanchéité tubulaire (50) à la section d'articulation (22a, b, c), dans lequel l'élément d'étanchéité tubulaire (50) est agencé à l'intérieur du canal de câble (11) et est relié à la section d'articulation (22a, b, c).

12. Procédé selon la revendication 11,
**caractérisé par** l'étape de :
- moulage par injection simultané de l'élément d'étanchéité tubulaire (50) d'un seul tenant avec le moulage par injection de la section d'articulation (22a, b, c).

13. Procédé selon la revendication 12, **caractérisé en ce que** la section d'étanchéité tubulaire (50) lors du moulage par injection
- est reliée par liaison de matière aux éléments de pincement (21a, b, c), ou
- forme une surface de contact avec les éléments de pincement (21a, b, c), qui permet un mouvement relatif entre les éléments de pincement (21a, b, c) et la section d'étanchéité (50).
